# EUROPEAN PATENT SPECIFICATION

(11) **EP 3 097 149 B1**
(45) Date of publication and mention of the grant of the patent: **11.09.2019**
(21) Application number: 14878887.0
(22) Date of filing: 16.12.2014
(51) Int. Cl.: C08L 71/12, C08L 53/00, C08L 25/00, C08L 25/08, C08K 5/07

(54) **POLY(PHENYLENE ETHER) COMPOSITION AND ARTICLE**
POLY(PHENYLENETHER)-ZUSAMMENSETZUNG UND ARTIKEL
COMPOSITION DE POLY(PHÉNYLÈNE ÉTHER) ET ARTICLE

(30) Priority: 20.01.2014 US 201461929318 P
(43) Date of publication of application: 30.11.2016
(73) Proprietor: SABIC Global Technologies B.V., 4612 PX Bergen op Zoom (NL)
(72) Inventor: ZIEGLER, Christopher, Selkirk, New York 12158 (US); BALFOUR, Kim G., Selkirk, New York 12158 (US); VENDON, Mark Victor, Selkirk, New York 12158 (US)
(74) Representative: Lang, Johannes
(86) International application number: PCT/US2014/070470
(87) International publication number: WO 2015/108647

(56) References cited:
- WO-A2-2012/161999
- WO-A2-2012/166453
- US-A1- 2005 154 100
- US-A1- 2006 079 642
- US-A1- 2006 278 425
- US-A1- 2007 112 132
- US-A1- 2008 113 138
- US-A1- 2012 308 753
- US-A1- 2013 078 502
- US-A1- 2013 280 532

## Description

### BACKGROUND OF THE INVENTION

Plastic articles used for refrigerated storage require low temperature impact strength to reduce fractures during impact events. Impact strength of plastics generally decreases with decreasing temperature. U.S. Patent Application Publication No. US 2012/0308753 A1 of Balfour et al. describes poly(phenylene ether) compositions exhibiting a desirable combination of optical clarity and impact strength at ambient temperature, but their impact strength is sometimes inadequate for use in low temperature environments. There remains a need for poly(phenylene ether) compositions exhibiting optical clarity and improved low temperature impact strength. In particular, there is a need for poly(phenylene ether) compositions exhibiting a transmittance of at least 60 percent, a correlated haze less than or equal to 20 percent, and a -20°C multiaxial impact energy to failure of at least 20 joules.

### BRIEF SUMMARY OF EMBODIMENTS OF THE INVENTION

One embodiment is a composition comprising the product of melt blending components comprising: 35 to 95.5 weight percent of a poly(phenylene ether); 4 to 50 weight percent of a first hydrogenated block copolymer (HBC1) comprising a polystyrene-poly(ethylene-butylene)-polystyrene triblock copolymer having a polystyrene content of 50 to 75 weight percent; and 0.5 to 18 weight percent of a second hydrogenated block copolymer (HBC2) comprising a polystyrene-poly(ethylene-butylene-styrene)-polystyrene triblock copolymer having a polystyrene content of 50 to 65 weight percent and a weight average molecular weight of 200,000 to 400,000 atomic mass units, wherein the first hydrogenated block copolymer and the second hydrogenated block copolymer are present in a weight ratio HBC1:HBC2 of 1:1 to 15:1; wherein the melt blended components comprise 0 to 0.5 weight percent polyolefins.

Another embodiment is an article comprising the composition.

These and other embodiments are described in detail below.

### DETAILED DESCRIPTION OF THE INVENTION

The present inventors have determined that the combination of a transmittance of at least 60 percent, a correlated haze less than or equal to 20 percent, and a -20°C multiaxial impact energy to failure of at least 20 joules is exhibited by a composition that includes specific amounts of a poly(phenylene ether), a first hydrogenated block copolymer (HBC1) that includes a polystyrene-poly(ethylene-butylene)-polystyrene triblock copolymer having a polystyrene content of 50 to 75 weight percent, and a second hydrogenated block copolymer (HBC2) that includes a polystyrene-poly(ethylene-butylene-styrene)-polystyrene triblock copolymer having a polystyrene content of 50 to 65 weight percent and a weight average molecular weight of 200,000 to 400,000 atomic mass units. The first hydrogenated block copolymer and the second hydrogenated block copolymer are present in a weight ratio of 1:1 to 15:1. The melt blended components comprise 0 to 0.5 weight percent polyolefin. The composition's combination of high transmittance, low haze, and high impact strength at -20 °C makes it useful for molding articles exposed to low temperatures during use, such as storage containers for refrigerators and freezers.

One embodiment is a composition comprising the product of melt blending components comprising: 35 to 95.5 weight percent of a poly(phenylene ether); 4 to 50 weight percent of a first hydrogenated block copolymer (HBC1) comprising a polystyrene-poly(ethylene-butylene)-polystyrene triblock copolymer having a polystyrene content of 50 to 75 weight percent; and 0.5 to 18 weight percent of a second hydrogenated block copolymer (HBC2) comprising a polystyrene-poly(ethylene-butylene-styrene)-polystyrene triblock copolymer having a polystyrene content of 50 to 65 weight percent and a weight average molecular weight of 200,000 to 400,000 atomic mass units, wherein the first hydrogenated block copolymer and the second hydrogenated block copolymer are present in a weight ratio of 1:1 to 15:1, wherein the melt blended components comprise 0 to 0.5 weight percent polyolefins.

The composition generally exhibits a correlated haze value less than or equal to 20%, a transmittance value greater than or equal to 60%, and a -20 °C multiaxial impact energy to failure value greater than or equal to 20 joules, wherein correlated haze and transmittance are determined at a sample thickness of 3.175 millimeters. Correlated haze and transmittance measurements were determined using 3.175 millimeter (0.125 inch) thick ASTM Dynatup disks and measured on a Gretag Macbeth Color-Eye™ 7000A spectrophotometer. The transmittance values correspond to Y tri-stimulus values for the 1931 CIE XYZ color space. Multiaxial impact energy to failure values were determined at -20 °C according to ASTM D 3763-10 using a test speed of 3.3 meters per second and a sample thickness of 3.175 millimeters. In some embodiments, the composition exhibits a correlated haze value of 2 to 20%, a transmittance value of 60 to 85%, and a -20 °C multiaxial impact energy to failure value of 20 to 75 joules. In some embodiments, the composition exhibits a correlated haze value of 3 to 10%, a transmittance value of 70 to 85%, and a -20 °C multiaxial impact energy to failure value of 50 to 75 joules.

The melt blended components include a poly(phenylene ether). Suitable poly(phenylene ether)s include those comprising repeating structural units having the formula 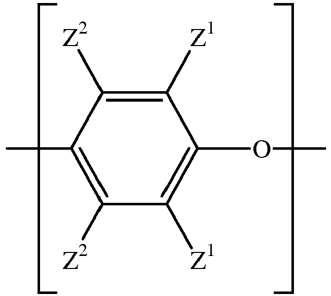 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.6 deciliter per gram, more specifically 0.35 to 0.55 deciliter per gram, even more specifically 0.4 to 0.5 deciliter per gram.

In some embodiments, the poly(phenylene ether) comprises 2,6-dimethyl-1,4-phenylene ether units, 2,3,6-trimethyl-1,4-phenylene ether units, or a combination thereof. In some embodiments, the poly(phenylene ether) comprises a poly(2,6-dimethyl-1,4-phenylene ether). In some embodiments, the poly(phenylene ether) comprises a poly(2,6-dimethyl-1,4-phenylene ether) having an intrinsic viscosity of 0.3 to 0.6 deciliter per gram, specifically 0.35 to 0.5 deciliter per gram, measured by Ubbelohde viscometer at 25°C in chloroform.

The poly(phenylene ether) can comprise molecules having aminoalkyl-containing end group(s), typically located in a position ortho to the hydroxyl group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a random copolymer, a block copolymer, a graft copolymer, or an ionomer, as well as combinations thereof.

The melt blended components comprise the poly(phenylene ether) in an amount of 35 to 95.5 weight percent, based on the total weight of the melt-blended components (which is equivalent to the total weight of the composition). Within this range, the poly(phenylene ether) amount can be 40 to 95 weight percent, specifically 50 to 95 weight percent, more specifically 60 to 94 weight percent, still more 70 to 93 weight percent, yet more specifically 75 to 93 weight percent.

In addition to the poly(phenylene ether), the melt blended components comprise a first hydrogenated block copolymer (HBC1) and a second hydrogenated block copolymer (HBC2). The first hydrogenated block copolymer and the second hydrogenated block copolymer are distinguished from each other by molecular architecture. HBC1 is a polystyrene-poly(ethylene-butylene)-polystyrene (S(EB)S), and HBC2 is a polystyrene-poly(ethylene-butylene-styrene)-polystyrene (S(EBS)S). In some embodiments, HBC1 and HBC2 are further distinguished by weight average molecular weight. Where not specified by suppliers, molecular architecture and polystyrene content can be determined by ¹H or ¹³C nuclear magnetic resonance spectroscopy, and weight average molecular weight can be determined by gel permeation chromatography using polystyrene standards. Methods of preparing hydrogenated block copolymers are known, and the skilled person can modify synthesis conditions to control molecular architecture, polystyrene content, and weight average molecular weight.

The first hydrogenated block copolymer (HBC1) comprises a polystyrene-poly(ethylene-butylene)-polystyrene triblock copolymer having a polystyrene content of 50 to 75 weight percent. Within this range, the polystyrene content of the first hydrogenated block copolymer can be 60 to 75 weight percent, specifically 62 to 72 weight percent. In some embodiments, HBC1 has a weight average molecular weight of 50,000 to 200,000 atomic mass units. Within the range of 50,000 to 200,000 atomic mass units, the HBC1 weight average molecular weight can be 50,000 to 150,000 atomic mass units, specifically 50,000 to 100,000 atomic mass units. In some embodiments, the first hydrogenated block copolymer consists of the polystyrene-poly(ethylene-butylene)-polystyrene triblock copolymer having a polystyrene content of 50 to 75 weight percent. In some embodiments, HBC1 comprises, based on the weight of HBC1, 10 to 20 weight percent of the polystyrene-poly(ethylenebutylene)-polystyrene triblock copolymer having a polystyrene content of 50 to 75 weight percent, and has a weight average molecular weight of 50,000 to 100,000 atomic mass units. An example of a first hydrogenated block copolymer is TUFTEC™ H1043 Resin, available from Asahi Kasei Elastomer.

The melt blended components comprise the first hydrogenated block copolymer in an amount of 4 to 50 weight percent, based on the total weight of the melt blended components. Within this range, the amount of first hydrogenated block copolymer can be 7 to 30 weight percent, specifically 10 to 20 weight percent.

The second hydrogenated block copolymers, HBC2, is a polystyrene-poly(ethylene-butylene-styrene)-polystyrene triblock copolymer having a polystyrene content of 50 to 65 weight percent and a weight average molecular weight of 200,000 to 400,000 atomic mass units. The polystyrene-poly(ethylene-butylene-styrene)-polystyrene triblock copolymer is a tapered block copolymer, also known as a controlled distribution block copolymer. Synthesis of such copolymers is described, for example, in U.S. Patent Application Publication No. US 2003/0181584 A1 of Handlin et al. Within the range of 50 to 65 weight percent, the polystyrene content can be 52 to 63 weight percent, specifically 54 to 61 weight percent, based on the weight of HBC2. Within the range of 200,000 to 400,000 atomic mass units, the weight average molecular weight can be 200,000 to 300,000 atomic mass units. An example of a commercially available HBC2 is KRATON™ A1535, available from Kraton Performance Polymers.

The second hydrogenated block copolymer is used in an amount of 0.5 to 18 weight percent, based on the total weight of melt blended components. Within this range, the HBC2 amount can be 1 to 10 weight percent, specifically 1 to 5 weight percent, more specifically 1 to 3 weight percent. In order to achieve the desired optical and ductile properties, the weight ratio of HBC1 to HBC2 is 1:1 to 15:1. Within this range, the weight ratio can be 1.5:1 to 15:1, specifically 5:1 to 15:1, more specifically 5:1 to 14:1.

In some embodiments, the melt blended components further comprise a C₃-C₂₄ alpha-hydroxyketone. Examples of C₃-C₂₄ alpha-hydroxyketones include hydroxyacetone (1-hydroxy-2-propanone; Chemical Abstracts Service (CAS) Reg. No. 116-09-6), acetoin (3-hydroxy-2-butanone; CAS Reg. No. 513-86-0), 2-hydroxyacetophenone (CAS Reg. No. 528-24-1), benzoin (2-hydroxy-2-phenylacetophenone, CAS Reg. No. 119-53-9), 2-hydroxy-1-phenyl-2-p-tolyl-ethanone (CAS Reg. No. 2431-02-9), and combinations thereof. In some embodiments, the C₃-C₂₄ alpha-hydroxyketone comprises benzoin. When present, the C₃-C₂₄ alpha-hydroxyketone is used in an amount of 0.2 to 1.5 weight percent, specifically 0.2 to 1 weight percent, more specifically 0.3 to 0.6 weight percent, based on the total weight of the melt blended components.

The melt blended components can, optionally, further include a hydrocarbon resin. As used herein, the term "hydrocarbon resin" refers to aliphatic hydrocarbon resins, hydrogenated aliphatic hydrocarbon resins, aliphatic/aromatic hydrocarbon resins, hydrogenated aliphatic/aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, terpene resins, hydrogenated terpene resins, terpene-phenol resins, rosins, hydrogenated rosins, rosin esters, hydrogenated rosin esters, or a combination thereof. In some embodiments, the hydrocarbon resin has a softening point of 120 to 155 °C. When present, such resins can be used in an amount of 1 to 15 weight percent, based on the total weight of the melt blended components. Alternatively, hydrocarbon resins can be minimized or excluded. Thus, in some embodiments, the melt-blended components comprise 0 to 1 weight percent of hydrocarbon resins. In some embodiments, the melt-blended components exclude hydrocarbon resins.

The melt blended components can, optionally, further comprise one or more additives known in the thermoplastics art. For example, the melt blended components can, optionally, further comprise an additive chosen from stabilizers, mold release agents, lubricants, processing aids, flame retardants (e.g., organophosphate esters, metal dialkylphosphinates, melamine phosphate, melamine pyrophosphate, melamine polyphosphate, melamine cyanurate, phosphazenes, metal hydroxides, and combinations thereof), drip retardants, nucleating agents, UV blockers, dyes, pigments, antioxidants, anti-static agents, blowing agents, mineral oil, metal deactivators, antiblocking agents, and combinations thereof. When present, such additives are used in an amount that does not substantially detract from the desired transmittance, haze, and low temperature multiaxial impact properties of the composition. The total amount of all additives is typically less than or equal to 5 weight percent, specifically less than or equal to 2 weight percent, more specifically less than or equal to 1 weight percent, based on the total weight of the melt blended components. Any or all of these additives can, optionally, be excluded from the melt blended components.

The melt blended components can, optionally, minimize or exclude components other than those described above. For example, in some embodiments, the melt-blended components comprise 0 to 1 weight percent of ethylenically unsaturated rubber. Ethylenically unsaturated rubbers include polybutadiene and polyisoprene, and contributions to their amount can come from the respective homopolymers, random copolymers (e.g., with styrene, or with styrene and acrylonitrile), graft copolymers (e.g., rubber-modified polystyrenes, also known as high-impact polystyrenes), and block copolymers (e.g., unhydrogenated and partially hydrogenated block copolymers of butadiene and styrene and of isoprene and styrene). In some embodiments, the melt-blended components exclude ethylenically unsaturated rubber.

Another component that can be minimized or excluded is hydrogenated block copolymers other than the first hydrogenated block copolymer and the second hydrogenated block copolymer. Thus, in some embodiments, the melt blended components comprise 0 to 1 weight percent of any hydrogenated block copolymer other than the first hydrogenated block copolymer and the second hydrogenated block copolymer. In some embodiments, the melt blended components exclude hydrogenated block copolymers other than the first hydrogenated block copolymer and the second hydrogenated block copolymer.

Another component that can be minimized or excluded is polyolefins. Thus, the melt blended components comprise 0 to 0.5 weight percent polyolefins. In some embodiments, polyolefins are excluded. As used herein, polyolefins refers to polymers that are the polymerization product of monomers consisting of C₂-C₂₀ olefins.

Another component that can be minimized or excluded is homopolystyrene. Thus, in some embodiments, the melt-blended components comprise 0 to 2 weight percent, specifically 0 to 1 weight percent of homopolystyrenes, including atactic homopolystyrenes, isotactic homopolystyrenes, syndiotactic homopolystyrenes, and combinations thereof. In some embodiments, melt-blended components exclude homopolystyrenes.

Another component that can be minimized or excluded is radial block copolymers of an alkenyl aromatic monomer and a conjugated diene. Thus, in some embodiments, the melt-blended components comprise 0 to 1 weight percent of radial block copolymers of an alkenyl aromatic monomer and a conjugated diene. In some embodiments, the melt-blended components exclude radial block copolymers of an alkenyl aromatic monomer and a conjugated diene.

Another component that can be minimized or excluded is fillers, including reinforcing fillers (such as glass fibers, talc, and mica) and nonreinforcing fillers (such as silica and alumina), which tend to reduce transmittance and increase haze. Thus, in some embodiments, the melt blended components comprise 0 to 1 weight percent of fillers. In some embodiments, the melt blended components exclude fillers.

In some embodiments, the melt blended components exclude polyamides. In some embodiments, the melt blended components exclude polyesters.

In some embodiments, particularly embodiments in which the composition is used to mold food and beverage containers, the melt-blended components comprise 0 to 1 weight percent of organophosphate esters. In some embodiments, the melt-blended components exclude organophosphate esters. In some embodiments, the melt-blended components exclude flame retardants.

In a very preferred embodiment of the composition, the poly(phenylene ether) comprises a poly(2,6-dimethyl-1,4-phenylene ether) having an intrinsic viscosity of 0.3 to 0.6 deciliter per gram, measured at 25 °C in chloroform; the first hydrogenated block copolymer has a weight average molecular weight of 50,000 to 100,000 atomic mass units; the first hydrogenated block copolymer and the second hydrogenated block copolymer are present in a weight ratio of 5:1 to 14:1; the melt blended components further comprise benzoin; and the melt-blended components comprise 75 to 85 weight percent of the poly(phenylene ether), 10 to 20 weight percent of the first hydrogenated block copolymer, 1 to 5 weight percent of the second hydrogenated block copolymer, and 0.3 to 0.6 weight percent of the benzoin.

The composition can be prepared by melt-blending or melt-kneading the components of the composition. The melt-blending or melt-kneading can be performed using common equipment such as ribbon blenders, HENSCHEL™ mixers, BANBURY™ mixers, drum tumblers, single-screw extruders, twin-screw extruders, multi-screw extruders, co-kneaders, and the like. For example, the present composition can be prepared by melt-blending the components in a twin-screw extruder at a temperature of 270 to 310 °C, specifically 280 to 300 °C.

The composition is useful for molding articles, particularly containers for refrigerated storage. The containers can be food or beverage containers. And the temperature of the refrigerated storage can be, for example, 10 to -20 °C. The high transmittance and low haze of the composition facilitates the identification of container contents, and the high impact strength at low temperature reduces breakage in the event of accidental drops or other impacts. Suitable methods of forming such articles include single layer and multilayer sheet extrusion, injection molding, blow molding, film extrusion, profile extrusion, pultrusion, compression molding, thermoforming, pressure forming, hydroforming, vacuum forming, and the like. Combinations of the foregoing article fabrication methods can be used.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### MATERIALS AND METHODS

Table 1 summarizes the materials used in the working examples described below.

**Table 1**

| Component | Description |
|---|---|
| Antioxidant | Octadecyl 3,5-di-tert-butyl-4-hydroxyhydrocinnamate, CAS Reg. No. 2082-79-3; obtained as IRGANOX™ 1076 from BASF. |
| Benzoin | 2-Hydroxy-1,2-diphenylethanone, CAS Reg. No. 119-5309; obtained from Aceto Corporation. |
| PPE 0.40 | Poly(2,6-dimethyl-1,4-phenylene ether), CAS Reg. No. 24938-67-8, having an intrinsic viscosity of about 0.40 deciliter per gram as measured in chloroform at 25°C; obtained as PPO™ 640 Resin from SABIC Innovative Plastics. |
| PPE 0.46 | Poly(2,6-dimethyl-1,4-phenylene ether), CAS Reg. No. 24938-67-8, having an intrinsic viscosity of about 0.46 deciliter per gram as measured in chloroform at 25°C; obtained as PPO™ 646 Resin from SABIC Innovative Plastics. |
| RBC KK38 | Styrene-Butadiene Radial Block Copolymer, having a polystyrene content of about 68 weight percent and a melt flow rate of about 9 grams per 10 minutes measured at 200 °C and 5 kilograms load; obtained as K-RESIN™ KK38 from Chevron Phillips. |
| S(EBS)S A1535 | Polystyrene-poly(ethylene-butylene-styrene)-polystyrene triblock copolymer having a polystyrene content of about 56-60 weight percent, a melt index less than 1 gram per 10 minutes measured at 230 °C and 5 kilogram load according to ASTM D1238, and a weight average molecular weight of about 260,000 atomic mass units; obtained as KRATON™ A1535 from Kraton Performance Polymers Inc. |
| S(EB)S H1043 | A polystyrene-poly(ethylene/butylene)-polystyrene triblock copolymer, CAS Reg. No. 66070-58-4, having a polystyrene content of 67 weight percent and a weight average molecular weight of about 73,000 atomic mass units; obtained as TUFTEC™ H1043 from Asahi Chemical. |
| TBPP | Tris(2,4-di-tert-butylphenyl)phosphite, CAS Reg. No. 31570-04-4; obtained as IRGAFOS™ 168 from BASF Corp. |

Compositions were compounded on a twin-screw extruder with 30 millimeter diameter screws operating at 300 rotations per minute and a throughput of about 19 kilograms/hour. All components were dry-blended before being added to the feed throat of the extruder. The extruder was operated with temperature zones of 240 / 270 / 290 / 290 / 290 / 290 °C from feed throat to die. The extrudate was water-cooled, pelletized, and dried for two hours at 100 °C in a vacuum oven before use for injection molding.

Test samples were injection molded on a 120T Van Dorn molder using barrel set points at 316 °C (600 °F) at an injection speed of 5.08 centimeters/second (2 inches/second).

Properties were determined according to ASTM protocols. Specifically, notched Izod impact strength values (expressed in units of joules/meter) were determined according to ASTM D 256-10 at 23 °C using a pendulum energy of 2 joules; values for 5 samples per composition were averaged. Multiaxial impact energy to failure values (expressed in units of joules) were determined at 23 °C and -20 °C according to ASTM D 3763-10 using a test speed of 3.3 meters per second and a sample thickness of 3.175 millimeters; values for 5-10 samples per composition were averaged. Heat deflection temperature values (expressed in degrees centigrade) were determined according to ASTM D 648-07 using a load of 1.82 megapascals and a sample thickness of 3.175 millimeters; values for 3 samples per composition were averaged. Melt volume flow rate values (expressed in cubic centimeters per ten minutes) were determined according to ASTM D 1238-10 at 300 °C and a 5 kilogram load; five measurements for one sample per composition were averaged.

Correlated haze values (expressed in units of percent), transmittance values (expressed in units of percent), and yellowness index values (unitless) were determined on 3.175 millimeter (0.125 inch) thick ASTM Dynatup disks and measured on a Gretag Macbeth Color-Eye™ 7000A spectrophotometer. The transmittance values correspond to Y tri-stimulus values for the 1931 CIE XYZ color space.

### EXAMPLES 1-8, COMPARATIVE EXAMPLES 1-3

These examples illustrate the effects of HBC1 content, HBC2 content, and HBC1 to HBC2 weight ratio. Examples 1 and 2 are replicates, as are Comparative Examples 2 and 3. The results, summarized in Table 1, show that the desired combination of a correlated haze value no more than 20%, a transmittance value of at least 60%, and a -20 °C multiaxial impact energy to failure value of at least 20 joules was exhibited by compositions in which the HBC1 to HBC2 weight ratio was greater than 0.7:1 and less than 20:1. A higher ratio was associated with inadequate low temperature impact strength (Comparative Example 1). A lower weight ratio of was associated with elevated haze values (Comparative Examples 2 and 3).

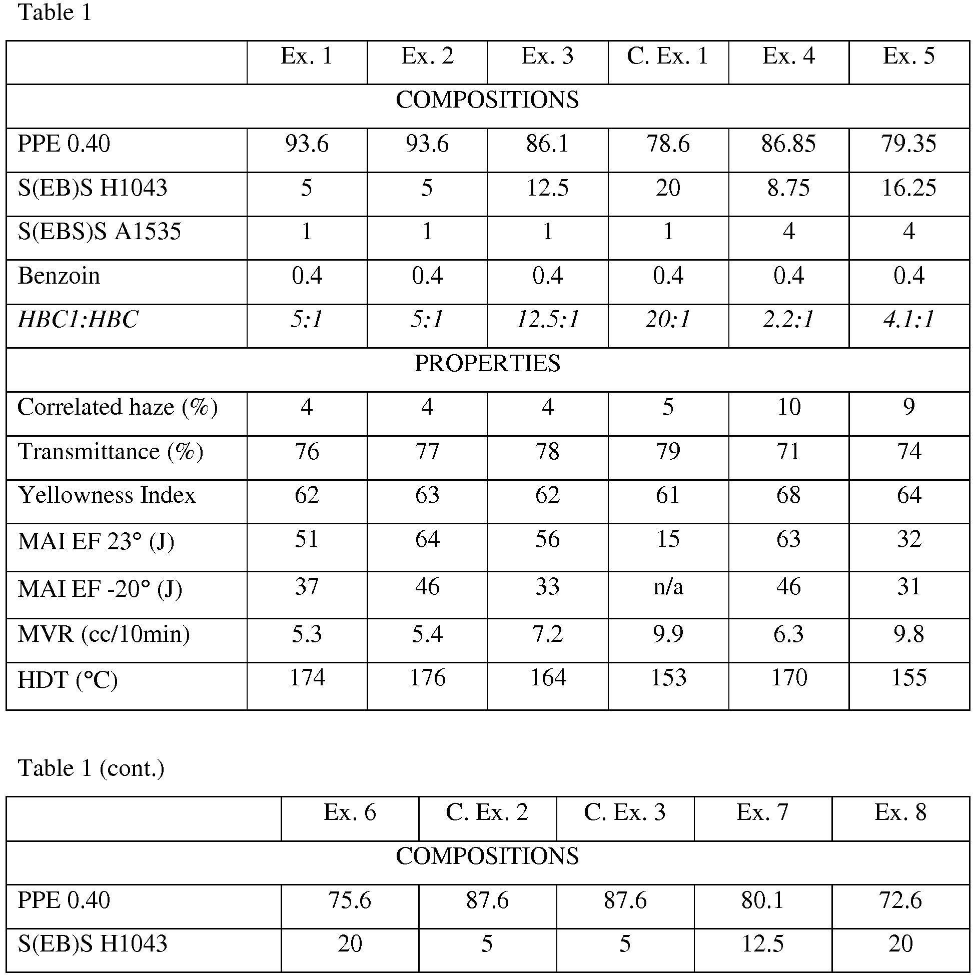

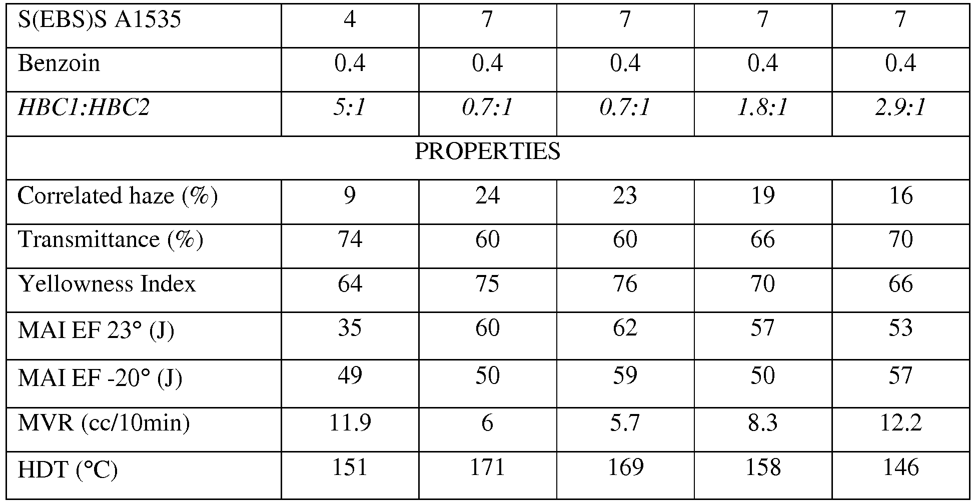

### EXAMPLES 9 AND 10, COMPARATIVE EXAMPLE 4

These examples illustrate the effects of HBC2 content. The results, summarized in Table 2, show that for the HBC2 S(EBS)S A1535, the desired combination of a correlated haze value no more than 20%, a transmittance value of at least 60%, and a -20 °C multiaxial impact energy to failure value of at least 20 joules was exhibited for samples with an HBC2 content less than 20 weight percent (Examples 9 and 10), above which haze was elevated (Comparative Example 4).

**Table 2**

| | Ex. 9 | Ex. 10 | C. Ex. 4 |
|---|---|---|---|
| COMPOSITIONS | | | |
| PPE 0.40 | 57 | 43 | 29 |
| S(EBS)S A1535 | 12 | 16 | 20 |
| S(EB)S H1043 | 30 | 40 | 50 |
| Benzoin | 1 | 1 | 1 |
| *HBC1:HBC2* | *2.5:1* | *2.5:1* | *2.5:1* |

| PROPERTIES | | | |
|---|---|---|---|
| Correlated haze (%) | 10.2 | 8.5 | 32 |
| Transmittance (%) | 71.9 | 75.7 | 79 |
| Yellowness Index | 55.1 | 45.1 | 33.9 |
| MAI EF 23° (J) | 54 | 54 | 45 |
| MAI EF-20° (J) | 59 | 59 | 47 |
| HDT (°C) | 126 | 107 | 89.7 |

### EXAMPLES 11-13, COMPARATIVE EXAMPLE 5

These examples illustrate the advantage of the present composition over a prior art composition. The results are summarized in Table 3. Comparative Example 5 is illustrative of the invention of U.S. Patent Application Publication No. US 2012/0308753 A1 of Balfour. It uses the HBC1 S(EB)S H1043 in combination with a radial block copolymer with unsaturated rubber (polybutadiene) (RBC KK38). The results show (1) that Comparative Example 5, illustrative of the prior art, was deficient in low-temperature ductility; and (2) that Examples 11-13 using the HBC2 S(EBS)S A1535, exhibited the desired combination of a correlated haze value no more than 20%, a transmittance value of at least 60%, and a -20 °C multiaxial impact energy to failure value of at least 20 joules.

**Table 3**

| | C. Ex. 5 | Ex. 11 | Ex. 12 | Ex. 13 |
|---|---|---|---|---|
| COMPOSITIONS | | | | |
| PPE 0.46 | 67.32 | 0 | 0 | 0 |
| PPE 0.40 | 0 | 80.48 | 81.46 | 87.60 |
| RBC KK38 | 18 | 0 | 0 | 0 |
| S(EB)S H1043 | 9 | 15.04 | 16.49 | 9.00 |
| S(EBS)S A1535 | 0 | 4.07 | 1.65 | 3.00 |
| Benzoin | 0.40 | 0.41 | 0.40 | 0.40 |
| Antioxidant | 0.25 | 0 | 0 | 0 |
| TBPP | 0.03 | 0 | 0 | 0 |
| *HBC1:HBC2* | -- | *3.7:1* | *10:1* | *3:1* |

| PROPERTIES | | | | |
|---|---|---|---|---|
| Notched Izod (J/m) | 50 | - | - | - |
| MAI EF 23° (J) | 20-40 | 48 | 35 | 74 |
| MAI EF -20° (J) | 5 | 54 | 53 | 59 |
| HDT (°C) | 130 | 156 | 149 | 162 |
| MVR (cc/10min) | 10 | 12.5 | 11.6 | 8.1 |
| Correlated haze (%) | 3-5 | 8.3 | 4.6 | 7.5 |
| Transmittance (%) | 80.0 | 67.2 | 73.2 | 67.3 |
| Yellowness Index | 60 | 75.4 | 66.6 | 75.7 |

## Claims

1. A composition comprising the product of melt blending components comprising:
35 to 95.5 weight percent of a poly(phenylene ether);
4 to 50 weight percent of a first hydrogenated block copolymer (HBC1) comprising a polystyrene-poly(ethylene-butylene)-polystyrene triblock copolymer having a polystyrene content of 50 to 75 weight percent; and
0.5 to 18 weight percent of a second hydrogenated block copolymer (HBC2) comprising a polystyrene-poly(ethylene-butylene-styrene)-polystyrene triblock copolymer having a polystyrene content of 50 to 65 weight percent and a weight average molecular weight of 200,000 to 400,000 atomic mass units determined by gel permeation chromatography using polystyrene standards, wherein the first hydrogenated block copolymer and the second hydrogenated block copolymer are present in a weight ratio of HBC1:HBC2 of 1:1 to 15:1;
wherein the melt blended components comprise 0 to 0.5 weight percent polyolefins.

2. The composition of claim 1, wherein the melt blended components comprise 75 to 93 weight percent of the poly(phenylene ether).

3. The composition of claim 1 or 2, wherein the first hydrogenated block copolymer comprises 10 to 20 weight percent of the polystyrene-poly(ethylenebutylene)-polystyrene triblock copolymer having a polystyrene content of 50 to 75 weight percent and a weight average molecular weight of 50,000 to 100,000 atomic mass units determined by gel permeation chromatography using polystyrene standards.

4. The composition of any of claims 1-3, wherein the melt blended components further comprise 0.2 to 1.5 weight percent of a C₃-C₂₄ alpha-hydroxyketone.

5. The composition of any of claims 1-4, wherein the melt blended components comprise 0 to 1 weight percent of any hydrogenated block copolymer other than the first hydrogenated block copolymer and the second hydrogenated block copolymer.

6. The composition of any of claims 1-5, wherein the melt-blended components comprise 0 to 1 weight percent of ethylenically unsaturated rubber.

7. The composition of any of claims 1-6, wherein the melt-blended components comprise 0 to 2 weight percent of homopolystyrene.

8. The composition of any of claims 1-7, wherein the melt-blended components comprise 0 to 1 weight percent of radial block copolymers of an alkenyl aromatic monomer and a conjugated diene.

9. The composition of any of claims 1-8, wherein the melt-blended components comprise 0 to 1 weight percent of hydrocarbon resins comprising aliphatic hydrocarbon resins, hydrogenated aliphatic hydrocarbon resins, aliphatic/aromatic hydrocarbon resins, hydrogenated aliphatic/aromatic hydrocarbon resins, cycloaliphatic hydrocarbon resins, hydrogenated cycloaliphatic resins, cycloaliphatic/aromatic hydrocarbon resins, hydrogenated cycloaliphatic/aromatic hydrocarbon resins, hydrogenated aromatic hydrocarbon resins, terpene resins, hydrogenated terpene resins, terpene-phenol resins, rosins, hydrogenated rosins, rosin esters, hydrogenated rosin esters, or a combination thereof.

10. The composition of any of claims 1-9, wherein the melt-blended components comprise 0 to 1 weight percent of flame retardants.

11. The composition of claim 1,
wherein the poly(phenylene ether) comprises a poly(2,6-dimethyl-1,4-phenylene ether) having an intrinsic viscosity of 0.3 to 0.6 deciliter per gram, measured by Ubbelohde viscometer at 25 °C in chloroform;
wherein the first hydrogenated block copolymer has a weight average molecular weight of 50,000 to 100,000 atomic mass units determined by gel permeation chromatography using polystyrene standards;
wherein the first hydrogenated block copolymer and the second hydrogenated block copolymer are present in a weight ratio HBC1:HBC2 of 5:1 to 14:1;
wherein the melt blended components further comprise benzoin; and
wherein the melt-blended components comprise
75 to 85 weight percent of the poly(phenylene ether),
10 to 20 weight percent of the first hydrogenated block copolymer,
1 to 5 weight percent of the second hydrogenated block copolymer, and
0.3 to 0.6 weight percent of the benzoin.

12. An article comprising the composition of any of claims 1-11.

13. The article of claim 12, wherein the article is a container for refrigerated storage.

14. The article of claim 12 or 13,
wherein the poly(phenylene ether) comprises a poly(2,6-dimethyl-1,4-phenylene ether) having an intrinsic viscosity of 0.3 to 0.6 deciliter per gram, measured by Ubbelohde viscometer at 25 °C in chloroform;
wherein the first hydrogenated block copolymer has a weight average molecular weight of 50,000 to 100,000 atomic mass units determined by gel permeation chromatography using polystyrene standards;
wherein the first hydrogenated block copolymer and the second hydrogenated block copolymer are present in a weight ratio HBC1:HBC2 of 5:1 to 14:1;
wherein the melt blended components further comprise benzoin; and
wherein the melt-blended components comprise
75 to 85 weight percent of the poly(phenylene ether),
10 to 20 weight percent of the first hydrogenated block copolymer,
1 to 5 weight percent of the second hydrogenated block copolymer, and
0.3 to 0.6 weight percent of the benzoin.

## Patentansprüche

1. Zusammensetzung, umfassend das Produkt eines Schmelzmischens von Komponenten umfassend:
35 bis 95,5 Gewichtsprozent eines Poly(phenylenether)s;
4 bis 50 Gewichtsprozent eines ersten hydrierten Block-Copolymers (HBC1) umfassend ein Polystyrol-Poly(ethylen-butylen)-Polystyrol-Triblock-Copolymer mit einem Polystyrol-Gehalt von 50 bis 75 Gewichtsprozent; und
0,5 bis 18 Gewichtsprozent eines zweiten hydrierten Block-Copolymers (HBC2) umfassend ein Polystyrol-Poly(ethylen-butylen-styrol)-Polystyrol-Triblock-Block-Copolymer mit einem Polystyrol-Gehalt von 50 bis 65 Gewichtsprozent und einem gewichtsgemittelten Molekulargewicht von 200.000 bis 400.000 atomaren Masseneinheiten bestimmt durch Gel-Permeations-Chromatographie unter Verwendung von Polystyrol-Standards, wobei das erste hydrierte Block-Copolymer und das zweite hydrierte Block-Copolymer in einem Gewichtsverhältnis von HBC1:HBC2 von 1:1 bis 15:1 vorliegen;
wobei die schmelzgemischten Komponenten 0 bis 0,5 Gewichtsprozent Polyolefine umfassen.

2. Zusammensetzung nach Anspruch 1, wobei die schmelzgemischten Komponenten 75 bis 93 Gewichtsprozent des Poly(phenylenether)s umfassen.

3. Zusammensetzung nach Anspruch 1 oder 2, wobei das erste hydrierte Block-Copolymer 10 bis 20 Gewichtsprozent des Polystyrol-Poly(ethylen-butylen)-Polystyrol-Triblock-Copolymers mit einem Polystyrol-Gehalt von 50 bis 75 Gewichtsprozent und einem gewichtsgemittelten Molekulargewicht von 50.000 bis 100.000 atomaren Masseneinheiten, bestimmt durch Gel-Permeations-Chromatographie unter Verwendung von Polystyrol-Standards, umfasst.

4. Zusammensetzung nach irgendeinem der Ansprüche 1 bis 3, wobei die schmelzgemischten Komponenten weiterhin 0,2 bis 1,5 Gewichtsprozent eines C₃-C₂₄-Alpha-Hydroxyketons umfassen.

5. Zusammensetzung nach irgendeinem der Ansprüche 1 bis 4, wobei die schmelzgemischten Komponenten 0 bis 1 Gewichtsprozent eines beliebigen anderen hydrierten Block-Copolymers als dem ersten hydrierten Block-Copolymer und dem zweiten hydrierten Block-Copolymer umfassen.

6. Zusammensetzung nach irgendeinem der Ansprüche 1 bis 5, wobei die schmelzgemischten Komponenten 0 bis 1 Gewichtsprozent ethylenisch ungesättigten Kautschuk umfassen.

7. Zusammensetzung nach irgendeinem der Ansprüche 1 bis 6, wobei die schmelzgemischten Komponenten 0 bis 2 Gewichtsprozent Homopolystyrol umfassen.

8. Zusammensetzung nach irgendeinem der Ansprüche 1 bis 7, wobei die schmelzgemischten Komponenten 0 bis 1 Gewichtsprozent Radial-Block-Copolymere eines Alkenyl-aromatischen Monomers und eines konjugierten Diens umfassen.

9. Zusammensetzung nach irgendeinem der Ansprüche 1 bis 8, wobei die schmelzgemischten Komponenten 0 bis 1 Gewichtsprozent Kohlenwasserstoffharze umfassen, welche aliphatische Kohlenwasserstoffharze, hydrierte aliphatische Kohlenwasserstoffharze, aliphatische/aromatische Kohlenwasserstoffharze, hydrierte aliphatische/aromatische Kohlenwasserstoffharze, cycloaliphatische Kohlenwasserstoffharze, hydrierte cycloaliphatische Harze, cycloaliphatische/aromatische Kohlenwasserstoffharze, hydrierte cycloaliphatische/aromatische Kohlenwasserstoffharze, hydrierte aromatische Kohlenwasserstoffharze, Terpenharze, hydrierte Terpenharze, Terpen-Phenol-Harze, Kolophonium, hydriertes Kolophonium, Kolophoniumester, hydrierte Kolophoniumester, oder eine Kombination davon, umfassen.

10. Zusammensetzung nach irgendeinem der Ansprüche 1 bis 9, wobei die schmelzgemischten Komponenten 0 bis 1 Gewichtsprozent Flammschutzmittel umfassen.

11. Zusammensetzung nach Anspruch 1,
wobei der Poly(phenylenether) einen Poly(2,6-dimethyl-1,4-phenylenether) mit einer intrinsischen Viskosität bzw. Strukturviskosität von 0,3 bis 0,6 Deziliter pro Gramm, gemessen mit einem Ubbelohde-Viskometer bei 25 °C in Chloroform, umfasst;
wobei das erste hydrierte Block-Copolymer ein gewichtsgemitteltes Molekulargewicht von 50.000 bis 100.000 atomaren Masseneinheiten, bestimmt durch Gel-Permeations-Chromatographie unter Verwendung von Polystyrol-Standards, aufweist;
wobei das erste hydrierte Block-Copolymer und das zweite hydrierte Block-Copolymer in einem Gewichtsverhältnis HBC1:HBC2 von 5:1 bis 14:1 vorliegen;
wobei die schmelzgemischten Komponenten weiterhin Benzoin umfassen; und
wobei die schmelzgemischten Komponenten
75 bis 85 Gewichtsprozent des Poly(phenylenether)s,
10 bis 20 Gewichtsprozent des ersten hydrierten Block-Copolymers,
1 bis 5 Gewichtsprozent des zweiten hydrierten Block-Copolymers, und
0,3 bis 0,6 Gewichtsprozent des Benzoins umfassen.

12. Gegenstand, umfassend die Zusammensetzung nach irgendeinem der Ansprüche 1 bis 11.

13. Gegenstand nach Anspruch 12, wobei der Gegenstand ein Behälter für Kühllagerung ist.

14. Gegenstand nach Anspruch 12 oder 13,
wobei der Poly(phenylenether)einen Poly(2,6-dimethyl-1,4-phenylenether) mit einer intrinsischen Viskosität bzw. Strukturviskosität von 0,3 bis 0,6 Deziliter pro Gramm, gemessen mit einem Ubbelohde-Viskometer bei 25 °C in Chloroform, umfasst;
wobei das erste hydrierte Block-Copolymer ein gewichtsgemitteltes Molekulargewicht von 50.000 von 100.000 atomaren Masseneinheiten, bestimmt durch Gel-Permeations-Chromatographie unter Verwendung von Polystyrol-Standards, aufweist;
wobei das erste hydrierte Block-Copolymer und das zweite hydrierte Block-Copolymer in einem Gewichtsverhältnis HBC1:HBC2 von 5:1 bis 14:1 vorliegen;
wobei die schmelzgemischten Komponenten weiterhin Benzoin umfassen; und
wobei die schmelzgemischten Komponenten
75 bis 85 Gewichtsprozent des Poly(phenylenether)s,
10 bis 20 Gewichtsprozent des ersten hydrierten Block-Copolymers,
1 bis 5 Gewichtsprozent des zweiten hydrierten Block-Copolymers, und
0,3 bis 0,6 Gewichtsprozent des Benzoins umfassen.

## Revendications

1. Composition comprenant le produit du mélange à l'état fondu de composants comprenant :
35 à 95,5 pourcents en poids d'un poly(phénylène éther) ;
4 à 50 pourcents en poids d'un premier copolymère à blocs hydrogénés (HBC1) comprenant un copolymère tribloc polystyrène-poly(éthylène-butylène)-polystyrène ayant une teneur en polystyrène de 50 à 75 pourcents en poids ; et 0,5 à 18 pourcents en poids d'un deuxième copolymère à blocs hydrogénés (HBC2) comprenant un copolymère tribloc polystyrène-poly(éthylène-butylène-styrène)-polystyrène ayant une teneur en polystyrène de 50 à 65 pourcents en poids et une masse moléculaire moyenne en masse de 200000 à 400 000 unités de masse atomique, déterminée par chromatographie par perméation de gel par utilisation d'étalons polystyrène, le premier copolymère à blocs hydrogénés et le deuxième copolymère à bloc hydrogénés étant présents selon un rapport en poids HBC1:HBC2 de 1:1 à 15:1 ;
dans laquelle les composants mélangés à l'état fondu comprennent 0 à 0,5 pourcent en poids de polyoléfines.

2. Composition selon la revendication 1, dans laquelle les composants mélangés à l'état fondu comprennent 75 à 93 pourcents en poids du poly(phénylène éther).

3. Composition selon la revendication 1 ou 2, dans laquelle le premier copolymère à blocs hydrogénés comprend 10 à 20 pourcents en poids du copolymère tribloc polystyrène-poly(éthylène-butylène)-polystyrène ayant une teneur en polystyrène de 50 à 75 pourcents en poids et une masse moléculaire moyenne en masse de 50000 à 100000 unités de masse atomique, déterminée par chromatographie par perméation de gel par utilisation d'étalons polystyrène.

4. Composition selon l'une des revendications 1 à 3, dans laquelle les composants mélangés à l'état fondu comprennent en outre 0,2 à 1,5 pourcent en poids d'une alpha-hydroxycétone en C₃-C₂₄.

5. Composition selon l'une des revendications 1 à 4, dans laquelle les composants mélangés à l'état fondu comprennent 0 à 1 pourcent en poids de tout copolymère à blocs hydrogénés autre que le premier copolymère à blocs hydrogénés et que le deuxième copolymère à blocs hydrogénés.

6. Composition selon l'une des revendications 1 à 5, dans laquelle les composants mélangés à l'état fondu comprennent 0 à 1 pourcent en poids d'un caoutchouc à insaturation éthylénique.

7. Composition selon l'une des revendications 1 à 6, dans laquelle les composants mélangés à l'état fondu comprennent 0 à 2 pourcents en poids d'homopolystyrène.

8. Composition selon l'une des revendications 1 à 7, dans laquelle les composants mélangés à l'état fondu comprennent 0 à 1 pourcent en poids de copolymères à blocs radiaux d'un monomère alcénylaromatique et d'un diène conjugué.

9. Composition selon l'une des revendications 1 à 8, dans laquelle les composants mélangés à l'état fondu comprennent 0 à 1 pourcent en poids de résines hydrocarbonées comprenant des résines hydrocarbonées aliphatiques, des résines hydrocarbonées aliphatiques hydrogénées, des résines hydrocarbonées aliphatiques/ aromatiques, des résines hydrocarbonées hydrogénées aliphatiques/aromatiques, des résines hydrocarbonées cycloaliphatiques, des résines cycloaliphatiques hydrogénées, des résines hydrocarbonées cycloaliphatiques/aromatiques, des résines hydrocarbonées hydrogénées cycloaliphatiques/aromatiques, des résines hydrocarbonées aromatiques hydrogénées, des résines terpéniques, des résines terpéniques hydrogénées, des résines de terpène-phénol, des colophanes, des colophanes hydrogénées, des esters de colophanes, des esters de colophanes hydrogénées ou une combinaison de ceux-ci.

10. Composition selon l'une des revendications 1 à 9, dans laquelle les composants mélangés à l'état fondu comprennent 0 à 1 pourcent en poids de retardateurs de flamme.

11. Composition selon la revendication 1,
dans laquelle le poly(phénylène éther) comprend un poly(2,6-diméthyl-1,4-phénylène éther) ayant une viscosité intrinsèque de 0,3 à 0,6 décilitre/gramme,
mesurée à l'aide d'un viscosimètre Ubbelohde à 25 °C dans le chloroforme ;
dans laquelle le premier copolymère à blocs hydrogénés présente une masse moléculaire moyenne en masse de 50 000 à 100 000 unités de masse atomique, déterminée par chromatographie par perméation de gel par utilisation d'étalons polystyrène ;
dans laquelle le premier copolymère à blocs hydrogénés et le deuxième copolymère à blocs hydrogénés sont présents selon un rapport en poids HBC1:HBC2 de 5:1 à 14:1 ;
dans laquelle les composants mélangés à l'état fondu comprennent en outre de la benzoïne ; et
dans laquelle les composants mélangés à l'état fondu comprennent
75 à 85 pourcents en poids du poly(phénylène éther),
10 à 20 pourcents en poids du premier copolymère à blocs hydrogénés,
1 à 5 pourcents en poids du deuxième copolymère à blocs hydrogénés, et
0,3 à 0,6 pourcent en poids de la benzoïne.

12. Article comprenant la composition selon l'une des revendications 1 à 11.

13. Article selon la revendication 12, dans lequel l'article est un récipient pour stockage réfrigéré.

14. Article selon la revendication 12 ou 13,
dans lequel le poly(phénylène éther) comprend un poly(2,6-diméthyl-1,4-phénylène éther) ayant une viscosité intrinsèque de 0,3 à 0,6 décilitre/gramme,
mesurée à l'aide d'un viscosimètre Ubbelohde à 25 °C dans le chloroforme ;
dans lequel le premier copolymère à blocs hydrogénés présente une masse moléculaire moyenne en masse de 50 000 à 100 000 unités de masse atomique, déterminée par chromatographie par perméation de gel par utilisation d'étalons polystyrène ;
dans lequel le premier copolymère à blocs hydrogénés et le deuxième copolymère à blocs hydrogénés sont présents selon un rapport en poids HBC1:HBC2 de 5:1 à 14:1 ;
dans lequel les composants mélangés à l'état fondu comprennent en outre de la benzoïne ; et
dans lequel les composants mélangés à l'état fondu comprennent
75 à 85 pourcents en poids du poly(phénylène éther),
10 à 20 pourcents en poids du premier copolymère à blocs hydrogénés,
1 à 5 pourcents en poids du deuxième copolymère à blocs hydrogénés, et
0,3 à 0,6 pourcent en poids de la benzoïne.
